# EUROPÄISCHE PATENTSCHRIFT

(11) **EP 0 744 819 B1**
(45) Veröffentlichungstag und Bekanntmachung des Hinweises auf die Patenterteilung: **13.01.1999**
(21) Anmeldenummer: 96107668.4
(22) Anmeldetag: 14.05.1996
(51) Int. Cl.: H02M 3/335, H04N 5/63, H04N 3/18

(54) **Schaltnetzteil mit Bereitschaftsbetrieb**
Switching power supply with stand-by mode
Alimentation à découpage avec mode de veille

(30) Priorität: 23.05.1995 DE 19518863
(43) Veröffentlichungstag der Anmeldung: 27.11.1996
(73) Patentinhaber: DEUTSCHE THOMSON-BRANDT GMBH, 78048 Villingen-Schwenningen (DE)
(72) Erfinder: Hermann, Wolfgang, 78114 Tennenbronn (DE); Louvel, Jean-Paul, 78050 Villingen-Schwenningen (DE)
(74) Vertreter: Wördemann, Hermes, Dipl.-Ing.

(56) Entgegenhaltungen:
- EP-A- 0 265 322
- US-A- 4 228 493

## Beschreibung

Die Erfindung geht aus von einem Schaltnetzteil mit Bereitschaftsbetrieb gemäß dem Oberbegriff des Anspruchs 1.

Ein derartiges Schaltnetzteil, insbesondere für einen Fernsehempfänger oder einen Videorecorder, überträgt z.B. im Normalbetrieb eine Leistung in der Größenordnung von 80 bis 120 Watt und arbeitet mit einer Schaltfrequenz von etwa 40 bis 100 kHz. Bei Bereitschaftsbetrieb, auch Standby-Betrieb genannt, wird durch das Schaltnetzteil eine stark verringerte Leistung in der Größenordnung von 0,5 bis 5 Watt übertragen. Um bei einer derart kleinen Leistung ein stabiles Arbeiten sicherzustellen, wird die Arbeitsfrequenz, also die Frequenz, mit der der Schalttransistor ein- und ausgeschaltet wird, auf Werte in der Größenordnung von 6 kHz herabgesetzt. Eine derart niedrige Arbeitsfrequenz liegt jedoch innerhalb des Hörbereiches und kann daher hörbare Störsignale erzeugen.

Es ist bekannt, das Schaltnetzteil im Bereitschaftsbetrieb in einem sogenannten Burst-Mode zu betreiben. In diesem Burst-Mode wird z.B. während einer Periode von 50 bis 100 Hz während eines Teiles der Periode der Schalttransistor mit einer Frequenz von 40 bis 100 kHz geschaltet und bleibt während des überwiegenden Teiles dieser Periode gesperrt. Die beträchtliche Verringerung der vom Schaltnetzteil übertragenen Leistung wird also dadurch erreicht, daß die Energieübertragung während des überwiegenden Teiles der Zeit unterbrochen ist (siehe z.B. EP-A-0 265 322).

Ein derartiger Burst-Mode erfordert somit besondere Schaltungsmaßnahmen in der Steuerung des Schalttransistors. Es ist andererseits bekannt, den Schalttransistor unmittelbar mit einem integrierten Schaltkreis anzusteuern, der an seinem Ausgang die Schaltspannung für den Schalttransistor liefert. Bekannte und preiswerte Schaltkreise dieser Art sind oftmals ohne weiteres nicht in der Lage, den beschriebenen Burst-Mode durchzuführen. Für den Burst-Mode sind dann zusätzliche periphere Schaltungen erforderlich.

Der Erfindung liegt die Aufgabe zugrunde, eine einfache Schaltung zur Realisierung des Burst-Mode für das Schaltnetzteil zu schaffen, die weitestgehend für jede Art von Schaltkreisen anwendbar ist.

Diese Aufgabe wird durch die im Anspruch 1 angegebene Erfindung gelöst. Vorteilhafte Weiterbildungen der Erfindung sind in den Unteransprüchen angegeben.

Bei der Erfindung ist somit eine Wicklung des Transformators an die Eingänge von zwei Gleichrichterschaltungen mit unterschiedlicher Polung angeschlossen, und die Summe der Ausgangsspannungen dieser Gleichrichterschaltungen ist an eine Steuerklemme des Schaltkreises angelegt. Die beiden Gleichrichterschaltungen haben dabei vorzugsweise unterschiedliche Zeitkonstanten.

Bei der erfindungsgemäßen Schaltung wird somit die stark unterschiedliche Form des Impulses am Transformator bei Normalbetrieb einerseits und Standby-Betrieb andererseits in vorteilhafter Weise zur Gewinnung einer Steuerspannung für den Burst-Mode ausgenutzt. Die Erfindung hat dabei mehrere Vorteile.

Die Schaltung ist für einen hohen Bereich an Ausgangsleistung anwendbar, da sie sich selbsttätig an die jeweilige Impulsform und Impulsamplitude am Transformator anpaßt. Es wird eine hohe Stabilität der Schaltung erreicht, wobei die Erzeugung von Signalen im Hörbereich vermieden wird. Die Schaltung ist praktisch für alle Arten von integrierten Schaltkreisen ohne eine Modifikation des Schaltkreises anwendbar. Der schaltungstechnische Aufwand ist gering und besteht bei einem Ausführungsbeispiel in nur fünf zusätzlichen Bauteilen in Form von Widerständen, Kondensatoren und Dioden. Die Schaltung erfordert keine kritische Einstellung.

Vorzugsweise sind die Ausgänge der beiden Gleichrichterschaltungen über einen Widerstand miteinander verbunden, und einer der Ausgänge ist über eine Diode mit dem Steuereingang des Schaltkreises verbunden. Als eine der Gleichrichterschaltungen wird vorzugsweise eine bereits vorhandene Gleichrichterschaltung zur Erzeugung der Regelspannung für die Stabilisierung der erzeugten Betriebsspannung ausgenutzt. Durch diese Lösung werden nur wenige zusätzliche Bauteile benötigt.

Vorzugsweise sind die Summe der Ausgangsspannungen der beiden Gleichrichterschaltungen und die Regelspannung für die Stabilisierung der Ausgangsspannungen an denselben Regeleingang des Schaltkreises angelegt. Die Zeitkonstante der Gleichrichterschaltung für die negative Spannung ist vorzugsweise nennenswert kleiner als die Zeitkonstante der Gleichrichterschaltung für die positive Spannung.

Gemäß einer Weiterbildung der Erfindung ist eine Schaltung vorgesehen, die im Burst-Mode die maximale Einschaltzeit des Schalttransistors begrenzt. Dabei ist vorzugsweise die Summe der Ausgangsspannungen der beiden Gleichrichterschaltungen an die Basis eines Transistors angelegt, dessen Emitter über einen ersten Kondensator geerdet und über einen zweiten Kondensator mit einer weiteren Steuerklemme des Schaltkreises verbunden ist. Die weitere Steuerklemme des Schaltkreises ist dabei vorzugsweise über einen weiteren Widerstand mit einem Ausgang des Netzgleichrichters verbunden.

Die Erfindung wird im folgenden an Hand der Zeichnung erläutert.
Darin zeigen
- Fig. 1: ein Schaltnetzteil mit der erfindungsgemäßen Schaltung,
- Fig. 2: Spannungsverläufe für Normalbetrieb und
- Fig. 3: Spannungsverläufe für den Bereitschafts- oder Stand by Betrieb.

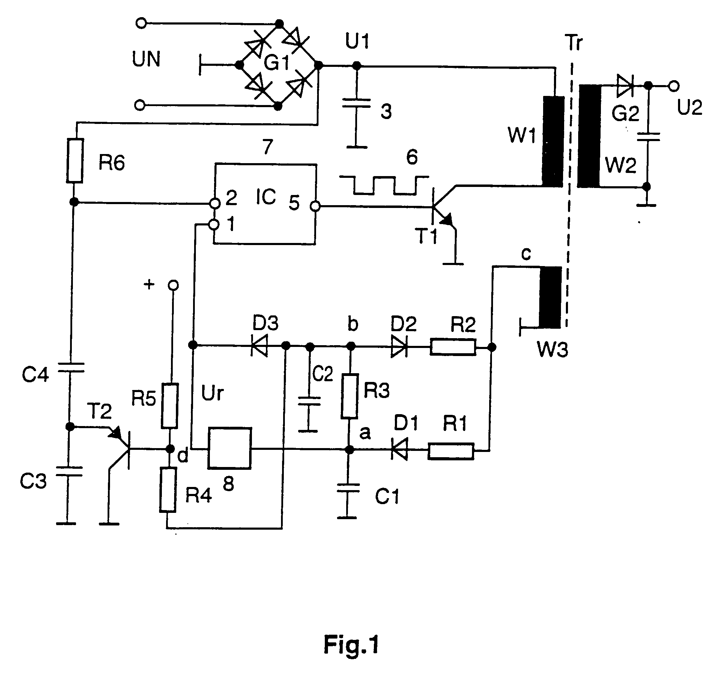

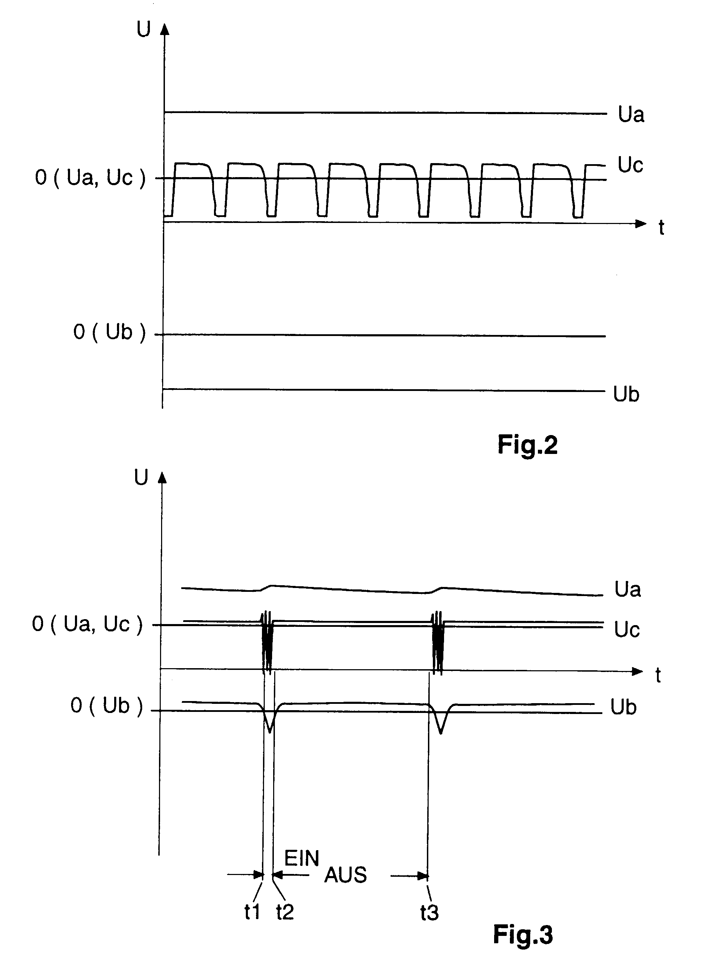

Die kleinen Buchstaben a - c zeigen dabei an, an welchen Punkten in Fig. 1 die Spannungen Ua, Ub, Uc gemäß Fig. 2, 3 stehen.

In Fig. 1 sind dargestellt die Netzspannung UN, der Netzgleichrichter G1, der Ladekondensator 3, der Trenntransformator Tr mit der Primärwicklung W1 und der Sekundärwicklung W2, der Gleichrichter G2 zur Erzeugung der Betriebsspannung U2, der Schalttransistor T1 und der die Schaltspannung 6 für den Schalttransistor T1 liefernde integrierte Schaltkreis 7. Die Wicklung W3 ist an den Eingang einer Gleichrichterschaltung mit der Diode D1 und dem Kondensator C1 angeschlossen. Diese Gleichrichterschaltung liefert am Ausgang a eine Spannung, die durch den positiven Anteil des Impulses am Punkt c bestimmt und wegen der hohen Zeitkonstante R1 x C1 weitestgehend konstant ist. Die Spannung vom Punkt a gelangt über die Regelschaltung 8 auf den Regeleingang 1 des Schaltkreises 7 und bewirkt die Stabilisierung der erzeugten Betriebsspannung U2. Die Zeitkonstante dieser Gleichrichterschaltung beträgt ca 10 ms. Ein weiterer Pin 2, der einen weiteren Regeleingang der Schaltung 7 dargestellt, ist über den Widerstand R6 mit dem Ausgang des Netzgleichrichters G1 und über den Kondensator C4 mit Erde verbunden. Die soweit beschriebene Schaltung ist bekannt.

Der Punkt c ist nun zusätzlich an eine zweite Gleichrichterschaltung mit der Diode D2 und dem Kondensator C2 angeschlossen. Diese erzeugt am Punkt b eine negative Gleichspannung, deren Wert der Amplitude des negativen Impulsanteils des Impulses am Punkt c proportional ist. Der Widerstand R3, der die beiden Ausgänge a und b der Gleichrichterschaltungen miteinander verbindet, bewirkt, daß am Punkt b die Summe der Ausgangsspannungen der beiden Gleichrichterschaltungen steht. Dieser Ausgang ist über die Diode D3 ebenfalls mit dem Regeleingang 1 des Schaltkreises 7 verbunden. Die Zeitkonstante dieser zweiten Gleichrichterschaltung beträgt ca 1 ms oder weniger.

Fig. 2 zeigt die Spannungen Ua, Ub, Uc an den Punkten a, b, c für den Normalbetrieb. Dabei sind die Spannungen mit unterschiedlichen Nullinien und unterschiedlichen Maßstäben dargestellt. Die Nullinie einer Spannung ist jeweils durch die Klammerausdrücke angedeutet. Am Punkt a steht die weitestgehend konstante Gleichspannung Ua. Dieser Spannung wird die durch D2 erzeugte negative Spannung hinzugefügt. Dadurch entsteht am Punkt b die Spannung Ub von etwa -14 Volt. Durch diese negative Spannung bleibt die Diode D3 gesperrt. Die Spannung am Punkt b hat dann auf den Regeleingang 1 des Schaltkreises 7 keinen Einfluß. Der Eingang 1 empfängt dann nur die Regelspannung Ur für die Stabilisierung.

Fig. 3 zeigt wieder die Spannungen wie Fig. 2, jedoch für den Bereitschaft- oder Standby-Betrieb. Im Bereitschaftsbetrieb ist die von dem Schaltnetzteil übertragene Leistung stark verringert. Daher ist die Zeit, während der am Punkt c eine negative Spannung steht, nämlich während der leitenden Zeit von T1, beträchtlich verringert. Dadurch wird die von D2 erzeugte negative Spannung wesentlich kleiner. Die von D1 erzeugte positive Spannung Ua am Punkt a ist dieser Änderung nicht unterworfen. Durch die Addition der beiden Spannungen Ua und Ub entsteht nunmehr am Punkt b nicht mehr eine negative Spannung wie in Fig. 2, sondern eine positive Spannung. Diese positive Spannung Ub steuert die Diode D3 leitend und gelangt an den Regeleingang 1 des Schaltkreises 7. Als Folge davon wird der Schaltkreis 7 infolge einer Überregelung gesperrt und liefert nicht mehr die Schaltspannung 6 für den Transistor T1. Der Schalterbetrieb ist dann unterbrochen, so daß am Punkt c keine Impulsspannung mehr auftritt. Dieses ist der Zustand von t2 bis t3 in Fig. 3. Da vom Punkt c an die Diode D2 kein Signal mehr gelangt und die Zeitkonstante R1 x C1 relativ groß ist, entsteht eine Hysterese in dem Sinne, daß der Regeleingang 1 stark übersteuert wird.

Da nunmehr am Punkt c keine Impulsspannung mehr steht, wird der Kondensator C1 entladen, so daß die Spannung Ua abfällt. Wenn diese positive Spannung Ua unter einen bestimmten Wert abgefallen ist, wird schließlich die Diode D3 wieder gesperrt. Der Schaltkreis 7 beginnt dann wieder zu arbeiten und erzeugt wieder die Schaltspannung 6. Der Zeitraum, in dem die Schaltspannung 6 anwesend ist und den Schalterbetrieb bewirkt, ist in Fig. 3 mit t1 bis t2 bezeichnet. Da nunmehr die Impulsspannung Uc am Punkt c wieder vorhanden ist, wird der Kondensator C1 wieder aufgeladen, bis im Zeitpunkt t2 die Spannung Ub wieder so groß ist, daß die Diode D3 wieder leitet und den Schaltkreis 7 und somit die Schaltspannung 6 abschaltet.

Mit anderen Worten: Während des normalen Schalterbetriebes des Schalttransistors wird aus der Impulsspannung des Transformators über die beiden Gleichrichterschaltungen eine Spannung aufgebaut, die nach einer gewissen Zeit, nämlich am Ende der EIN-Zeit des Burst-Mode, den Schaltkreis und damit die Schaltspannung für den Schalttransistor abschaltet. Mit dem Abschalten des Schaltkreises und dem Wegfall der Schaltspannung 6 beginnt die AUS-Zeit des Burst-Mode. Während dieser AUS-Zeit wird den beiden Gleichrichterschaltungen keine Spannung mehr zugeführt. Durch Entladung der Ladekondensatoren der beiden Gleichrichterschaltungen ändert sich deren Summenspannung derart, daß schließlich der Schaltkreis am Ende der AUS-Zeit wieder eingeschaltet und der Schalterbetrieb des Schalttransistors wieder einsetzt.

Die Frequenz der Schaltspannung 6 beträgt etwa 45 kHz und liegt somit oberhalb des Hörbereiches. Die Burstfrequenz, also die Frequenz entsprechend der Periode t1 bis t3, ist im wesentlichen durch den Kondensator C1 bestimmt und beträgt ungefähr 50 Hz.

Die Spannung Ub ist außerdem an den Spannungsteiler R4/R5 angeschlossen, dessen Mittelpunkt d mit der Basis des Transistors T2 verbunden ist. Dessen Emitter ist über den Kondensator C3 geerdet und über den Kondensator C4 mit der Steuerklemme 2 des Schaltkreises 7 sowie über den Widerstand R6 mit dem Ausgang des Netzgleichrichters G1 verbunden. Diese zusätzlich Schaltung dient dazu, die maximale Einschaltzeit des Schalttransistors T1 während der EIN-Zeit des Burst-Mode zu begrenzen, und arbeit folgendermaßen:

Die Spannung an dem Kondensator C1 ist jeweils zu Beginn eines Bursts, also zu Beginn der EIN-Zeit des Burst-Mode, zu gering, und der Schaltkreis 7 geht dann auf die maximale Einschaltzeit, die durch die Zeitkonstante aus dem Widerstand R6 und dem Kondensator C4 bestimmt ist. Der dabei fließende große Strom im Schalttranistor T1, der bis auf 4 A ansteigen kann, erzeugt wieder das Problem einer hörbaren Störung mit 50 Hz. Zur Beseitigung dieses Nachteils dient die dargestellte Schaltung R4, R5, T2, C3, C4, R6. Während Normalbetrieb ist der Transistor T2 leitend, und zwar in der Sättigung, da seine Basis durch die Spannung Ub vom Kondensator C2 negativ vorgespannt ist. Dann ist der Kondensator C4 mit Erde verbunden, und sein Wert bestimmt die Zeitkonstante der Stromsimulation für die Drain-Strecke. Im Standby-Betrieb ist die Basis des Transistors T2 über den Widerstand R5 an eine positive stabilisierte Gleichspannung angeschlossen, so daß dann der Transistor T2 gesperrt ist. Die Kapazität, die nun an den Pin 2 des Schaltkreises 7 angeschlossen ist, ist bestimmt durch die Reihenschaltung der Kondensatoren C4 und C3, die etwa 0,89 nF beträgt. Die Zeitkonstante ist nun wesentlich kleiner als während des Normalbetriebs, und als Ergebnis ist die maximale Einschaltzeit des Schalttransistors T1 in erwünschter Weise nur etwa 3 µs und der maximale Kollektorstrom dieses Transistor etwa 1,8 A.

Die beschriebene, zum Schaltkreis 7 periphere Schaltung kann auch in demSchaltkreis 7 integriert sein. Bei dem in Fig. 1 verwendeten Schaltkreis vom Typ TDA 4605 kann dabei ein bereits vorhandener Eingang des integrierten Schaltkreises, insbesondere der Pin 8 = Zero Cross Detector hierfür verwendet werden.

## Patentansprüche

1. Schaltnetzteil mit Bereitschaftsbetrieb mit Burst-Mode mit einem Transformator (Tr) mit einer Primärwicklung (W1), einem damit in Reihe liegenden Schalttransistor (T1), einem diesen steuernden integrierten Schaltkreis (7) und einer an einer Trafowicklung (W3) angeschlossenen ersten Gleichrichter schaltung (D1, R1,C1) zur Erzeugung einer Regelspannung (Ur) die an eine Steuerklemme des integrierten Schaltkreises geführt ist, **dadurch gekennzeichnet**, daß die Traftowicklung (W3) des Transformators (Tr) an den Eingang einer zweiten Gleichrichterschaltung (D2, R2, C2) mit unterschiedlicher Polung angeschlossen ist und die Summe der Ausgangsspannungen dieser Gleichrichterschaltungen (D1, D2) an die Steuerklemme (1) des Schaltkreises (7) angelegt ist.

2. Netzteil nach Anspruch 1, **dadurch gekennzeichnet,** da**ß** die beiden Gleichrichterschaltungen (D1, D2) unterschiedlich große Zeitkonstanten haben.

3. Netzteil nach Anspruch 1, **dadurch gekennzeichnet,** da**ß** die Ausgänge der beiden Gleichrichterschaltungen (D1, D2) über einen Widerstand (R3) miteinander verbunden sind und einer der Ausgänge (b) über eine Diode (D3) mit dem Steuereingang (1) des Schaltkreises (7) verbunden ist.

4. Netzteil nach Anspruch 1, **dadurch gekennzeichnet,** da**ß** als eine der Gleichrichterschaltungen eine bereits vorhandene Gleichrichterschaltung (D1) zur Erzeugung der Regelspannung (Ur) für die Stabilisierung der erzeugten Betriebsspannungen (U2) ausgenutzt ist.

5. Netzteil nach Anspruch 4, **dadurch gekennzeichnet**, daß die Summe der Ausgangsspannungen und die Regelspannung (Ur) an denselben Regeleingang (1) des Schaltkreises (7) angelegt sind.

6. Netzteil nach Anspruch 2, **dadurch gekennzeichnet**, daß die Zeitkonstante der Gleichrichterschaltung (D2) für die negative Spannung nennenswert kleiner ist als die der Gleichrichterschaltung (D1) für die positive Spannung.

7. Netzteil nach Anspruch 6, **dadurch gekennzeichnet**, daß die beiden Zeitkonstanten etwa 1 ms bzw. 10.ms betragen.

8. Netzteil nach Anspruch 1, **dadurch gekennzeichnet**, daß eine Schaltung vorgesehen ist, die im Burst-Mode die maximale Einschaltzeit des Schalttransistors (T1) begrenzt.

9. Netzteil nach Anspruch 8, **dadurch gekennzeichnet**, daß die Summe der Ausgangsspannungen an die Basis eines Transistors (T2) angelegt ist, dessen Emitter über einen ersten Kondensator (C3) geerdet und über einen zweiten Kondensator (C4) mit einer weiteren Steuerklemme (2) des Schaltkreises (7) verbunden ist.

10. Netzteil nach Anspruch 9, **dadurch gekennzeichnet**, daß die zweite Steuerklemme (2) des Schaltkreises (7) über einen Widerstand (R6) mit einem Ausgang des Netzgleichrichters (G1) verbunden ist.

11. Netzteil nach Anspruch 1, **dadurch gekennzeichnet**, daß die Schaltungen in dem integrierten Schaltkreis (7) integriert sind.

## Claims

1. Switched-mode power supply having standby operation with a burst mode, having a transformer (Tr) with a primary winding (W1), a switching transistor (T1) connected in series with the said primary winding, an integrated circuit (7), which controls the said switching transistor, and a first rectifier circuit (D1, R1, C1) connected to a transformer winding (W3) for generating a control voltage (Ur), which is fed to a control terminal of said integrated circuit (7),
characterized in that the transformer winding (W3) of the transformer (Tr) is connected to the input of a second differently biased rectifier circuit (D2, R2, C2) and the sum of the output voltages of these rectifier circuits (D1, D2) is applied to the control terminal (1) of said integrated circuit (7).

2. Power supply according to claim 1, characterized in that the two rectifier circuits (D1, D2) have time constants of different magnitudes.

3. Power supply according to claim 1, characterized in that the outputs of the two rectifier circuits (D1, D2) are connected to one another via a resistor (R3), and one of the outputs (b) is connected via a diode (D3) to the control input (1) of the integrated circuit (7).

4. Power supply according to claim 1, characterized in that a rectifier circuit (D1) which is already present for generating the control voltage (Ur) for the stabilization of the generated operating voltages (U2) is utilized as one of the rectifier circuits.

5. Power supply according to claim 4, characterized in that the sum of the output voltages and the control voltage (Ur) are applied to the same control input (1) of the integrated circuit (7).

6. Power supply according to claim 2, characterized in that the time constant of the rectifier circuit (D2) for the negative voltage is appreciably shorter than that of the rectifier circuit (D1) for the positive voltage.

7. Power supply according to claim 6, characterized in that the two time constants are approximately 1 ms and 10 ms, respectively.

8. Power supply according to cclaim 1, characterized in that a circuit is provided which limits the maximum turn-on time of the switching transistor (T1) in the burst mode.

9. Power supply according to claim 8, characterized in that the sum of the output voltages is applied to the base of a transistor (T2), the emitter of which is earthed via a first capacitor (C3) and is connected via a second capacitor (C4) to a further control terminal (2) of the integrated circuit (7).

10. Power supply according to claim 9, characterized in that the second control terminal (2) of the circuit (7) is connected via a resistor (R6) to an output of the mains rectifier (G1).

11. Power supply according to claim 1, characterized in that the circuits are integrated in the integrated circuit (7).

## Revendications

1. Alimentation électrique à découpage avec mode de veille comprenant un transformateur (Tr) avec un enroulement primaire (W1), un transistor de commutation (T1) branché en série avec celui-ci, un circuit intégré de commutation (7) qui commande ledit transistor et un premier circuit redresseur (D1, R1, C1) connecté à un enroulement de transformateur (W3) aux fins de produire une tension de régulation (Ur) qui est appliquée à une borne de commande du circuit intégré de commutation, caractérisée en ce que l'enroulement (W3) du transformateur (Tr) est connecté à l'entrée d'un second circuit redresseur (D2, R2, C2) de polarité différente et que la somme des tensions de sortie de ces circuits redresseurs (D1, D2) est appliquée à la borne de commande (1) du circuit de commutation (7).

2. Alimentation électrique selon la revendication 1, caractérisée en ce que les deux circuits redresseurs (D1, D2) ont des constantes de temps de valeur différente.

3. Alimentation électrique selon la revendication 1, caractérisée en ce que les sorties des deux circuits redresseurs (D1, D2) sont reliées l'une à l'autre par une résistance (R3) et en ce qu'une des sorties (b) est reliée par l'intermédiaire d'une diode (D3) à l'entrée de commande (1) du circuit de commutation (7).

4. Alimentation électrique selon la revendication 1, caractérisée en ce que l'on utilise pour l'un des circuits redresseurs un circuit redresseur (D1) existant pour produire la tension de régulation (Ur) pour la stabilisation des tensions de service (U2) produites.

5. Alimentation électrique selon la revendication 4, caractérisée en ce que la somme des tensions de sortie et la tension de régulation (Ur) sont appliquées à la même entrée de régulation (1) du circuit de commutation (7).

6. Alimentation électrique selon la revendication 2, caractérisée en ce que la constante de temps du circuit redresseur (D2) pour la tension négative est sensiblement plus faible que celle du circuit redresseur (D1) pour la tension positive.

7. Alimentation électrique selon la revendication 6, caractérisée en ce que les deux constantes de temps sont respectivement d'environ 1 ms et 10 ms.

8. Alimentation électrique selon la revendication 1, caractérisée en ce qu'il est prévu un circuit qui limite le temps maximal de commutation à l'état passant du transistor de commutation (T1) en mode à découpage.

9. Alimentation électrique selon la revendication 8, caractérisée en ce que la somme des tensions de sortie est appliquée à la base d'un transistor (T2) dont l'émetteur est relié à la masse par l'intermédiaire d'un premier condensateur (C3) et à une borne de commande (2) supplémentaire du circuit de commutation (7) par l'intermédiaire d'un second condensateur (C4).

10. Alimentation électrique selon la revendication 9, caractérisée en ce que la deuxième borne de commande (2) du circuit de commutation (7) est connectée à une sortie du redresseur de la tension du réseau (G1) par l'intermédiaire d'une résistance (R6).

11. Alimentation électrique selon la revendication 1, caractérisée en ce que les circuits sont intégrés au circuit intégré de commutation (7).
